# EUROPEAN PATENT APPLICATION

(11) **EP 4 535 540 A1**
(43) Date of publication of application: **09.04.2025**
(21) Application number: 23811749.3
(22) Date of filing: 19.05.2023
(51) Int. Cl.: H01M 50/414, C08F 290/06, H01M 50/434, H01M 50/437, H01M 50/443, H01M 50/446, H01M 50/451, H01M 50/489

(54) **STARTING MATERIAL OF COATING MATERIAL FOR SECONDARY BATTERY SEPARATORS, COATING MATERIAL FOR SECONDARY BATTERY SEPARATORS, SECONDARY BATTERY SEPARATOR AND SECONDARY BATTERY**

(30) Priority: 27.05.2022 JP 2022086786
(71) Applicant: Mitsui Chemicals, Inc., Tokyo 104-0028 (JP)
(72) Inventor: TOMITA, Yoshihiko, Sodegaura-shi, Chiba 299-0265 (JP); KAGAWA, Yasuyuki, Sodegaura-shi, Chiba 299-0265 (JP)
(74) Representative: Hoffmann Eitle
(86) International application number: PCT/JP2023/018707
(87) International publication number: WO 2023/228877

(57) **Abstract**

A raw material of a coating material for secondary battery separators contains a water-soluble polymer. The water-soluble polymer contains a first constituent unit derived from a reactive surfactant and a second constituent unit derived from an acidic group-containing vinyl monomer. A content ratio of the first constituent unit relative to the water-soluble polymer is 3% by mass or more and 30% by mass or less. A content ratio of the second constituent unit relative to the water-soluble polymer is 3% by mass or more and 19% by mass or less.

## Description

### TECHNICAL FIELD

The present invention relates to a raw material of a coating material for secondary battery separators, a coating material for secondary battery separators, a secondary battery separator, and a secondary battery. More specifically, the present invention relates to a raw material of a coating material for secondary battery separators; a coating material for secondary battery separators containing the raw material of a coating material for secondary battery separators; a secondary battery separator including a coating film of the coating material for secondary battery separators; and a secondary battery including the secondary battery separator.

### BACKGROUND ART

Conventionally, a separator is provided in a secondary battery to isolate a positive electrode from a negative electrode and to allow ions in an electrolytic solution to pass through.

As such a separator, for example, a polyolefin porous film is known.

On the other hand, a coat layer may be provided on a surface of the separator from the viewpoint of imparting heat resistance. Such coat layer contains a binder resin and inorganic particles.

As the binder resin, an acrylic water-soluble polymer is used. From the viewpoint of dispersibility, it has been known to introduce a reactive surfactant unit into the acrylic water-soluble polymer.

As such binder resin, for example, a water-soluble polymer containing a reactive surfactant unit, in which the reactive surfactant unit is 1 part by weight relative to 101 parts by weight of the water-soluble polymer, has been proposed (see, for example, Example 1 in Patent Document 1).

In addition, as the binder resin, a lithium ion secondary battery binder composition containing a water-soluble polymer which contains a reactive surfactant unit and an acid group-containing monomer unit in an amount of 20% by weight or more and 70% by weight or less has been proposed (see, for example, Patent Document 2).

### Citation List

### Patent Documents

Patent Document 1: Japanese Unexamined Patent Publication No. 2014-222649
Patent Document 2: WO 2014/185381

### SUMMARY OF THE INVENTION

### PROBLEM TO BE SOLVED BY THE INVENTION

However, in addition to heat resistance, air permeability and adhesive properties to a substrate (specifically, adhesive properties to the polyolefin porous film) is required for the coat layer.

On the other hand, in Patent Document 1, since the reactive surfactant unit is low relative to the water-soluble polymer, heat resistance, air permeability, and adhesive properties are disadvantageously lowered.

In addition, in Patent Document 2, since the acid group-containing monomer unit is high relative to the water-soluble polymer, heat resistance, air permeability, and adhesive properties are disadvantageously lowered.

The present invention provides a raw material of a coating material for secondary battery separators having excellent heat resistance, air permeability, and adhesive properties; a coating material for secondary battery separators containing the raw material of a coating material for secondary battery separators; a secondary battery separator including a coating film of the coating material for secondary battery separators; and a secondary battery including the secondary battery separator.

### MEANS FOR SOLVING THE PROBLEM

The present invention [1] includes a raw material of a coating material for a secondary battery separator, including a water-soluble polymer, in which the water-soluble polymer contains a first constituent unit derived from a reactive surfactant and a second constituent unit derived from an acidic group-containing vinyl monomer, a content ratio of the first constituent unit relative to the water-soluble polymer is 3% by mass or more and 30% by mass or less, and a content ratio of the second constituent unit relative to the water-soluble polymer is 3% by mass or more and 19% by mass or less.

The present invention [2] includes the raw material of a coating material for a secondary battery separator described in [1], in which the water-soluble polymer has a glass transition temperature of 150°C or more.

The present invention [3] includes the raw material of a coating material for a secondary battery separator described in [1] or [2], in which the water-soluble polymer contains a third constituent unit derived from an amide group-containing vinyl monomer, and a content ratio of the third constituent unit relative to the water-soluble polymer is 51% by mass or more and 94% by mass or less.

The present invention [4] includes the raw material of a coating material for a secondary battery separator described in any one of the above-described [1] to [3], in which the reactive surfactant is an ether sulfate type anionic reactive surfactant.

The present invention [5] includes the raw material of a coating material for a secondary battery separator described in [4], in which the ether sulfate type anionic reactive surfactant is an ethylene oxide adduct.

The present invention [6] includes the raw material of a coating material for a secondary battery separator described in any one of the above-described [1] to [3], in which the reactive surfactant is an ethylene oxide addition type nonionic reactive surfactant.

The present invention [7] includes the raw material of a coating material for a secondary battery separator described in [5] or [6], in which the number of moles of ethylene oxide added is 5 moles or more and 30 moles or less.

The present invention [8] includes a coating material for a secondary battery separator, containing the raw material of a coating material for a secondary battery separator described in any one of the above-described [1] to [7]; and an inorganic particle.

The present invention [9] includes a second battery separator, including a porous film; and a coating film of the coating material for a separator described in [8] being disposed on at least one surface of the porous film.

The present invention [10] includes a secondary battery including a positive electrode; a negative electrode; and the secondary battery separator described in [9] being disposed between the positive electrode and the negative electrode.

### EFFECTS OF THE INVENTION

The raw material of a coating material for secondary battery separators according to the present invention contains a water-soluble polymer containing a first constituent unit derived from a reactive surfactant and a second constituent unit derived from an acidic group-containing vinyl monomer, each at a predetermined ratio. Therefore, it has excellent heat resistance, air permeability, and adhesive properties.

The coating material for secondary battery separators according to the present invention contains the raw material of a coating material for secondary battery separators according to the present invention. Therefore, it has excellent heat resistance, air permeability, and adhesive properties.

The secondary battery separator of the present invention includes a coating film of the coating material for secondary battery separators according to the present invention. Therefore, it has excellent heat resistance, air permeability, and adhesive properties.

The secondary battery of the present invention includes the secondary battery separator of the present invention. Therefore, it has excellent heat resistance, air permeability, and adhesive properties.

### DESCRIPTION OF THE EMBODIMENTS

### <Raw Material of a Coating Material for Secondary Battery Separators>

The raw material of a coating material for secondary battery separators contains a water-soluble polymer.

The water-soluble polymer contains a first constituent unit derived from a reactive surfactant and a second constituent unit derived from an acidic group-containing vinyl monomer.

Such water-soluble polymer is a polymer obtained by polymerizing a raw material of the water-soluble polymer.

The water-soluble polymer is defined as a polymer having a residual solid content of 0.1% or less when 1 g of a polymer, once dried, is stirred and dissolved in 100 ml of water for 24 hours and then filtered through a 300 mesh wire gauze.

The raw material of the water-soluble polymer contains a reactive surfactant and an acidic group-containing vinyl monomer.

### [Reactive Surfactant]

The reactive surfactant is a surfactant copolymerizable with an acidic group-containing vinyl monomer. Specifically, the reactive surfactant is a surfactant having an ethylenically unsaturated group (e.g., vinyl group, (meth)acryloyl group).

Examples of the reactive surfactant include an anionic reactive surfactant and a nonionic reactive surfactant.

The anionic reactive surfactant is represented by, for example, the following formula (1).

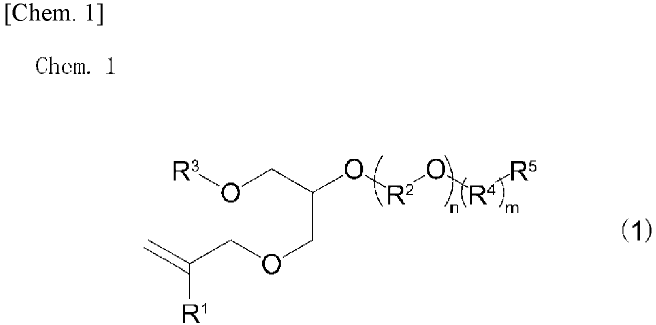

In the above-described formula (1), R¹ represents a hydrogen atom or a methyl group. R¹ preferably represents a hydrogen atom.

In the above-described formula (1), R² represents an alkylene group having 1 or more and 4 or less carbon atoms. That is, the anionic reactive surfactant represented by the above-described formula (1) is an alkylene oxide adduct. Examples of the alkylene group having 1 or more and 4 or less carbon atoms include methylene group, ethylene group, propylene group, and butylene group. R² preferably represents an ethylene group from the viewpoint of improving heat resistance, air permeability, and adhesive properties (specifically, adhesive properties to a porous film (described later)). That is, the anionic reactive surfactant represented by the above-described formula (1) is preferably an ethylene oxide adduct.

In the above-described formula (1), R³ represents an alkyl group. Examples of the alkyl group include a linear alkyl group and a branched alkyl group. Examples of the linear alkyl group include linear alkyl groups having 1 or more and 20 or less carbon atoms. Examples of the linear alkyl group having 1 or more and 20 or less carbon atoms include methyl group, ethyl group, propyl group, butyl group, pentyl group, hexyl group, heptyl group, octyl group, nonyl group, decyl group, undecyl group, dodecyl group (lauryl group), tridecyl group, tetradecyl group, pentadecyl group, hexadecyl group, heptadecyl group, octadecyl group, nonadecyl group, and eicodecyl group.

Examples of the branched alkyl group include branched alkyl groups having 3 or more and 16 or less carbon atoms. Examples of the branched alkyl group having 3 or more and 16 or less carbon atoms include isopropyl group, isobutyl group, s-butyl group, t-butyl group, 1-ethylpropyl group, 1-methylbutyl group, 1-methylpentyl group, 1,1-dimethylpropyl group, 1,1-dimethylbutyl group, thexyl group, cyclohexyl group, 1,1-dimethylpentyl group, 1-methylhexyl group, 1,1-dimethylhexyl group, 1-methylheptyl group, 2-methylbutyl group, 2-ethylbutyl group, 2,2-dimethylpropyl group, cyclohexylmethyl group, 2-ethylhexyl group, 2-propylpentyl group, and 3-methylpentyl group.

R³ preferably represents a linear alkyl group. R³ more preferably represents a linear alkyl group having 8 or more and 20 or less carbon atoms. R³ further preferably represents an undecyl group.

**In** the above-described formula (1), R⁴ represents an alkylene group. Examples of the alkylene group include a linear alkylene group and a branched alkylene group. Examples of the linear alkylene group include linear alkylene groups having 1 or more and 10 or less carbon atoms. Examples of the linear alkylene group having 1 or more and 10 or less carbon atoms include methylene group, ethylene group, propylene group, butylene group, pentylene group, hexylene group, heptylene group, octylene group, nonylene group, and decylene group.

Examples of the branched alkylene group include alkylene groups having 3 or more and 10 or less carbon atoms. Examples of the alkylene group having 3 or more and 10 or less carbon atoms include isopropylene, isobutylene, s-butylene, t-butylene, isopentylene, s-pentylene, 2-methylhexylene, and 2-ethylhexylene.

R⁵ represents an anionic hydrophilic group. Examples of the anionic hydrophilic group include carboxyl group, sulfonic acid group, and phosphate group. These functional groups may also form a salt (e.g., a sodium salt, a potassium salt, a calcium salt, a magnesium salt, and an ammonium salt). R⁵ preferably represents a salt of a sulfonic acid group (e.g., -SO₃X, where X represents a salt) from the viewpoint of improving heat resistance, air permeability, and adhesive properties.

That is, the anionic reactive surfactant is preferably an ether sulfate type anionic reactive surfactant. R⁵ more preferably represents -SO₃NH₄.

m represents 0 or 1. m preferably represents 0.

n represents the number of moles of alkylene oxide (preferably, ethylene oxide) added. n is, for example, 4 or more; from the viewpoint of improving heat resistance and adhesive properties by suppressing the difficulty of copolymerization of the reactive surfactant due to a decrease in solubility of the reactive surfactant in water, preferably 5 or more, more preferably 10 or more, and for example, 45 or less, preferably 40 or less, more preferably 35 or less; from the viewpoint of improving heat resistance, further preferably 30 or less, particularly preferably 25 or less, most preferably 20 or less.

The anionic reactive surfactant is preferably represented by the following formula (2) from the viewpoint of improving heat resistance, air permeability, and adhesive properties.

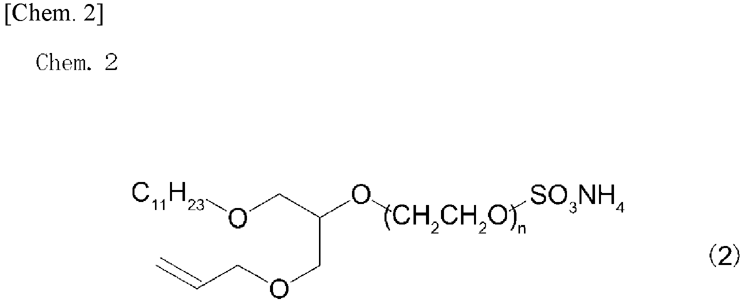

The anionic reactive surfactant represented by the above-described formula (2) is an anionic reactive surfactant, wherein, in the above-described formula (1), R¹ represents a hydrogen atom; R² represents an ethylene group; R³ represents an undecyl group; R⁵ represents -SO₃NH₄; and m represents 0.

In addition, a commercially available product can be used as the anionic reactive surfactant. Examples of such commercially available product include ADEKA REASOAP SR series (anionic reactive surfactant represented by the above-described formula (2), manufactured by ADEKA Corporation).

The nonionic reactive surfactant is represented by, for example, the following formula (3).

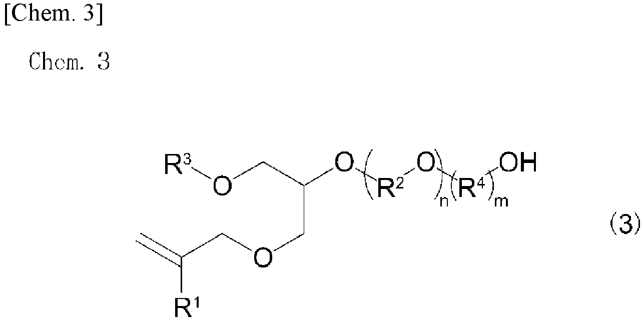

In the above-described formula (3), R¹ to R⁴, m and n are as defined as those in the above-described formula (1).

In the above-described formula (3), R¹ preferably represents a hydrogen atom.

In the above-described formula (3), R² preferably represents an ethylene group. That is, the nonionic reactive surfactant is preferably an ethylene oxide adduct (ethylene oxide addition type nonionic reactive surfactant) from the viewpoint of heat resistance, air permeability, and adhesive properties.

In the above-described formula (3), R³ preferably represents a linear alkyl group. R³ more preferably represents an undecyl group. In the above-described formula (3), R⁴ preferably represents a linear alkylene group. R⁴ more preferably represents an ethylene group. In the above-described formula (3), m represents 1.

In the above-described formula (3), n is, for example, 4 or more; from the viewpoint of improving heat resistance and adhesive properties by suppressing the difficulty of copolymerization of the reactive surfactant due to a decrease in solubility of the reactive surfactant in water, 5 or more, more preferably 10 or more, and for example, 45 or less, preferably 40 or less, more preferably 35 or less; from the viewpoint of improving heat resistance, further preferably 30 or less, particularly preferably 25 or less, most preferably 20 or less.

The nonionic reactive surfactant is preferably represented by the following formula (4).

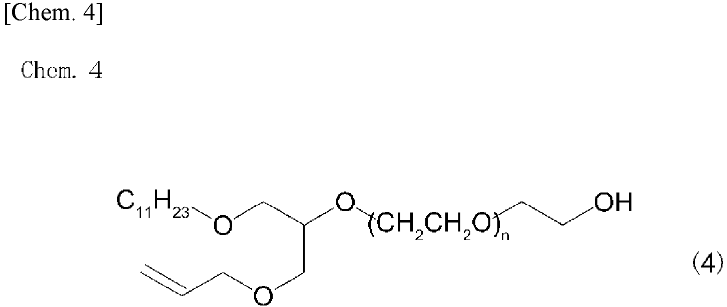

The nonionic reactive surfactant represented by the above-described formula (4) is a nonionic reactive surfactant, wherein, in the above-described formula (3), R¹ represents a hydrogen atom; R² represents an ethylene group; R³ represents an undecyl group; R⁴ represents an ethylene group; and m represents 1.

In addition, a commercially available product can be used as the nonionic reactive surfactant. Examples of such commercially available product include ADEKA REASOAP ER series (nonionic reactive surfactant represented by the above-described formula (4), manufactured by ADEKA Corporation), and AQUALON KH Series (nonionic reactive surfactant represented by the above-described formula (4), manufactured by DKS Co. Ltd.).

The reactive surfactant is then appropriately selected according to the type of the porous film (described later) and the type of surface treatment applied to the porous film (described later).

These reactive surfactants can be used alone or in combination of two or more.

A content ratio of the reactive surfactant relative to the raw material of the water-soluble polymer is, for example, 3% by mass or more; from the viewpoint of further improving adhesive properties, preferably 5% by mass or more, and for example, 30% by mass or less, preferably 20% by mass or less, more preferably 15% by mass or less, further preferably 10% by mass or less, particularly preferably 9% by mass or less.

### [Acidic Group-Containing Vinyl Monomer]

Examples of the acidic group-containing vinyl monomer include carboxy group-containing vinyl monomers, sulfonic acid group-containing vinyl monomers, and phosphoric acid group-containing vinyl monomers.

The carboxy group-containing vinyl monomer is a vinyl monomer that is copolymerizable with a reactive surfactant and that contains a carboxy group.

Examples of the carboxy group-containing vinyl monomer include monocarboxylic acids, dicarboxylic acids, or salts thereof. An example of the monocarboxylic acid include (meth)acrylic acid. Examples of the dicarboxylic acid include itaconic acid, maleic acid, fumaric acid, itaconic anhydride, maleic anhydride, and fumaric anhydride. As used herein, the "(meth)acryl" refers to methacryl and/or acryl.

As the carboxy group-containing vinyl monomer, preferably, monocarboxylic acid is used. As the carboxy group-containing vinyl monomer, more preferably, (meth)acrylic acid is used. As the carboxy group-containing vinyl monomer, further preferably, methacrylic acid is used.

The sulfonic acid group-containing vinyl monomer is a vinyl monomer that is copolymerizable with a reactive surfactant and that contains a sulfonic acid group.

Examples of the sulfonic acid group-containing vinyl monomer include allylsulfonate, methallylsulfonate, and acrylamide t-butylsulfonate. The sulfonic acid group-containing vinyl monomer includes a salt thereof. Examples of the salt of the sulfonic acid group-containing vinyl monomer include alkali metal salts (e.g., a sodium salt, and a potassium salt) and ammonium salts. Specific examples thereof include sodium allylsulfonate, sodium methallylsulfonate, and ammonium methallylsulfonate.

The phosphoric acid group-containing vinyl monomer is a vinyl monomer that is copolymerizable with a reactive surfactant and that contains a phosphoric acid group.

An example of the phosphoric acid group-containing vinyl monomer includes 2-methacryloyloxyethyl acid phosphate.

As the acidic group-containing vinyl monomer, preferably, a carboxy group-containing vinyl monomer is used from the viewpoint of heat resistance.

The acidic group-containing vinyl monomers can be used alone or in combination of two or more.

A content ratio of the acidic group-containing vinyl monomer relative to the raw material of the water-soluble polymer is, for example, 3% by mass or more, preferably 5% by mass or more, and for example, 19% by mass or less; from the viewpoint of improving heat resistance and adhesive properties, preferably 15% by mass or less, more preferably 10% by mass or less.

### [Amide Group-Containing Vinyl Monomer]

The raw material of the water-soluble polymer preferably contains an amide group-containing vinyl monomer. As the details are described later, when the raw material of the water-soluble polymer contains an amide group-containing vinyl monomer, the water-soluble polymer contains a third constituent unit derived from the amide group-containing vinyl monomer.

The amide group-containing vinyl monomer is a vinyl monomer that is copolymerizable with a reactive surfactant and an acidic group-containing vinyl monomer and that contains an amide group.

Examples of the amide group-containing vinyl monomer include methacrylamide and acrylamide.

As the amide group-containing vinyl monomer, preferably, methacrylamide is used.

The amide group-containing vinyl monomers can be used alone or in combination of two or more.

A content ratio of the amide group-containing vinyl monomer relative to the raw material of the water-soluble polymer is, for example, 20% by mass or more, preferably 40% by mass or more, more preferably 45% by mass or more; from the viewpoint of further improving heat resistance, air permeability, and adhesive properties, further preferably 51% by mass or more, particularly preferably 60% by mass or more, most preferably 70% by mass or more, and for example, 94% by mass or less, preferably 80% by mass or less.

### [Copolymerizable Monomer]

The raw material of the water-soluble polymer preferably contains a copolymerizable monomer. As the details are described later, when the raw material of the water-soluble polymer contains a copolymerizable monomer, the water-soluble polymer contains a fourth constituent unit derived from the copolymerizable monomer.

The copolymerizable monomer is a monomer copolymerizable with a reactive surfactant, an acidic group-containing vinyl monomer, and an amide group-containing vinyl monomer.

Examples of the copolymerizable monomer include alkyl (meth)acrylates, functional group-containing vinyl monomers (excluding the acidic group-containing vinyl monomer and the amide group-containing vinyl monomer), vinyl esters, aromatic vinyl monomers, N-substituted unsaturated carboxylic acid amides, heterocyclic vinyl compounds, vinylidene halide compounds, α-olefins, dienes, and crosslinkable vinyl monomers.

An example of the alkyl (meth)acrylate includes an alkyl (meth)acrylate having an alkyl moiety having 1 to 12 carbon atoms. Examples of the alkyl (meth)acrylate having an alkyl moiety having 1 to 12 carbon atoms include alkyl (meth)acrylates having an alkyl moiety having 1 to 4 carbon atoms, and alkyl (meth)acrylates having an alkyl moiety having 5 to 12 carbon atoms. Examples of the alkyl (meth)acrylate having an alkyl moiety having 1 to 4 carbon atoms include methyl (meth)acrylate, ethyl (meth)acrylate, isopropyl (meth)acrylate, n-butyl (meth)acrylate, isobutyl (meth)acrylate, and t-butyl (meth)acrylate. Examples of the alkyl (meth)acrylate having an alkyl moiety having 5 to 12 carbon atoms include n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, and octadecyl (meth)acrylate.

As the alkyl (meth)acrylate, preferably, an alkyl (meth)acrylate having an alkyl moiety having 1 to 4 carbon atoms is used.

Examples of the functional group-containing vinyl monomer (excluding the acidic group-containing vinyl monomer and the amide group-containing vinyl monomer) include hydroxy group-containing vinyl monomers, amino group-containing vinyl monomers, glycidyl group-containing vinyl monomers, cyano group-containing vinyl monomers, and acetoacetoxy group-containing vinyl monomers.

Examples of the hydroxyl group-containing vinyl monomer include 2-hydroxyethyl (meth)acrylate and 2-hydroxypropyl (meth)acrylate. As the hydroxyl group-containing vinyl monomer, preferably, 2-hydroxyethyl (meth)acrylate is used. As the hydroxyl group-containing vinyl monomer, more preferably, 2-hydroxyethyl methacrylate is used.

Examples of the amino group-containing vinyl monomer include 2-aminoethyl (meth)acrylate, 2-(N-methylamino)ethyl (meth)acrylate, and 2-(N,N-dimethylamino)ethyl (meth)acrylate.

An example of the glycidyl group-containing vinyl monomer includes glycidyl (meth)acrylate.

An example of the cyano group-containing vinyl monomer includes (meth)acrylonitrile.

An example of the acetoacetoxy group-containing vinyl monomer includes acetoacetoxyethyl (meth)acrylate.

Examples of the vinyl esters include vinyl acetate and vinyl propionate.

Examples of the aromatic vinyl monomer include styrene, α-methylstyrene, p-methylstyrene, vinyltoluene, and chlorostyrene.

An example of the N-substituted unsaturated carboxylic acid amide includes N-methylol (meth)acrylamide. As the N-substituted unsaturated carboxylic acid amide, preferably, N-methylol acrylamide is used.

An example of the heterocyclic vinyl compound includes vinylpyrrolidone.

Examples of the vinylidene halide compound include vinylidene chloride and vinylidene fluoride.

Examples of the α-olefins include ethylene and propylene.

An example of the dienes includes butadiene.

Examples of the crosslinkable vinyl monomer include vinyl monomers having two or more vinyl groups. Examples of the vinyl monomer having two or more vinyl groups include methylenebis(meth)acrylamide, divinylbenzene, polyethylene glycol chain-containing di(meth)acrylate, trimethylolpropane tetraacrylate, pentaerythritol triacrylate, and pentaerythritol tetraacrylate.

As the copolymerizable monomer, preferably, a functional group-containing vinyl monomer is used. As the copolymerizable monomer, more preferably, a hydroxy group-containing vinyl monomer is used.

These copolymerizable monomers can be used alone or in combination of two or more.

A content ratio of the copolymerizable monomer relative to the raw material of the water-soluble polymer is, for example, 1% by mass or more, preferably 5% by mass or more, and for example, 60% by mass or less, preferably 40% by mass or less, more preferably 20% by mass or less, further preferably 15% by mass or less, particularly preferably 10% by mass or less.

### [Method for Producing Water-Soluble Polymer]

The water-soluble polymer is obtained by polymerizing the raw material of the water-soluble polymer by a known method.

Specifically, for example, the raw material of the water-soluble polymer and a polymerization initiator are blended into water, and the raw material of the water-soluble polymer is polymerized and then aged as necessary.

The polymerization initiator is not particularly limited, and examples thereof include water-soluble initiators, oil-soluble initiators, and redox-based initiators. Examples of the water-soluble initiator include persulfate (e.g., ammonium persulfate, potassium persulfate), hydrogen peroxide, organic hydroperoxide, and 4,4'-azobis(4-cyanovaleric acid) acid. Examples of the oil-soluble initiator include benzoyl peroxide and azobisisobutyronitrile.

As the polymerization initiator, preferably, a water-soluble initiator is used, more preferably, persulfate is used, further preferably, ammonium persulfate is used.

A blending ratio of the polymerization initiator relative to 100 parts by mass of the raw material of the water-soluble polymer is, for example, 0.01 parts by mass or more, preferably 0.1 parts by mass or more, more preferably 0.2 parts by mass or more, further preferably 0.5 parts by mass or more, and, for example, 3 parts by mass or less, preferably 1 part by mass or less.

These polymerization initiators can be used alone or in combination of two or more.

A polymerization temperature is, for example, 30°C or more, preferably 50°C or more, and for example, 95°C or less, preferably 85°C or less under a normal pressure. Further, the polymerization time is, for example, 0.5 hours or more, preferably 1.5 hours or more, and for example, 20 hours or less, preferably 10 hours or less.

The aging time is, for example, 0.5 hours or more, preferably 1.5 hours or more, and for example, 8 hours or less, preferably 6 hours or less.

In addition, in the above-described polymerization, from the viewpoint of improving production stability, a known additive such as a pH adjusting agent, a metal ion sealing agent (e.g., ethylenediaminetetraacetic acid and a salt thereof), a molecular weight adjusting agent (chain transfer agent) (e.g., mercaptans and low molecular halogen compounds) may be blended at an appropriate ratio.

Further, before or after the above-described polymerization, a neutralizing agent such as ammonia may be blended, and a pH may be adjusted within a range of 5 or more and 11 or less.

Thus, as the polymer of the raw material of the water-soluble polymer, the water-soluble polymer is obtained in the form of an aqueous solution containing the water-soluble polymer.

The solid content concentration of the aqueous solution containing the water-soluble polymer is, for example, 10% by mass or more, and for example, 50% by mass or less.

As described above, the water-soluble polymer is produced by polymerizing the raw material of the water-soluble polymer containing a reactive surfactant and an acidic group-containing vinyl monomer.

Therefore, the water-soluble polymer contains the first constituent unit derived from the reactive surfactant and the second constituent unit derived from the acidic group-containing vinyl monomer.

A content ratio of the first constituent unit relative to the water-soluble polymer is 3% by mass or more; from the viewpoint of further improving adhesive properties, preferably 5% by mass or more, and 30% by mass or less, preferably 20% by mass or less, more preferably 15% by mass or less, further preferably 10% by mass or less, particularly preferably 9% by mass or less.

When the content ratio of the first constituent unit is the lower limit or more, the heat resistance, air permeability, and adhesive properties can be improved.

On the other hand, when the content ratio of the first constituent unit is less than the lower limit, the heat resistance, air permeability, and adhesive properties are lowered.

When the content ratio of the first constituent unit is the upper limit or less, the heat resistance, air permeability, and adhesive properties can be improved.

On the other hand, when the content ratio of the first constituent unit exceeds the upper limit, the heat resistance, air permeability, and adhesive properties are lowered.

The content ratio of the first constituent unit can be calculated from the amount of the reactive surfactant charged. That is, the content ratio of the first constituent unit is as defined as the above-described content ratio of the reactive surfactant relative to the raw material of the water-soluble polymer.

A content ratio of the second constituent unit relative to the water-soluble polymer is 3% by mass or more, preferably 5% by mass or more, and 19% by mass or less; from the viewpoint of further improving heat resistance and adhesive properties, preferably 15% by mass or less, more preferably 10% by mass or less.

When the content ratio of the second constituent unit is the lower limit or more, the heat resistance, air permeability, and adhesive properties can be improved.

On the other hand, when the content ratio of the second constituent unit is less than the lower limit, the heat resistance, air permeability, and adhesive properties are lowered.

When the content ratio of the second constituent unit is the upper limit or less, the heat resistance, air permeability, and adhesive properties can be improved.

On the other hand, when the content ratio of the second constituent unit exceeds the upper limit, the heat resistance, air permeability, and adhesive properties are lowered.

The content ratio of the second constituent unit can be calculated from the amount of the acidic group-containing vinyl monomer charged. That is, the content ratio of the second constituent unit is as defined as the above-described content ratio of the acidic group-containing vinyl monomer relative to the raw material of the water-soluble polymer.

In the water-soluble polymer, the mass ratio of the first constituent unit to the second constituent unit (first constituent unit/second constituent unit) is, for example, 0.1 or more, preferably 0.2 or more, more preferably 0.3 or more, and for example, 15.0 or less, preferably 10.0 or less, more preferably 7.0 or less, further preferably 5.0 or less.

When the above-described mass ratio is the lower limit or more and the upper limit or less, the heat resistance, air permeability, and adhesive properties can be improved.

In addition, when the raw material of the water-soluble polymer contains an amide group-containing vinyl monomer, the water-soluble polymer contains a third constituent unit derived from the amide group-containing vinyl monomer.

A content ratio of the third constituent unit in the water-soluble polymer is, for example, 20% by mass or more, preferably 40% by mass or more, more preferably 45% by mass or more; from the viewpoint of further improving heat resistance, air permeability, and adhesive properties, further preferably 51% by mass or more, particularly preferably 60% by mass or more, most preferably 70% by mass or more, and for example, 94% by mass or less, preferably 80% by mass or less.

When the content ratio of the third constituent unit is the lower limit or more, the heat resistance, air permeability, and adhesive properties can be improved.

When the content ratio of the third constituent unit is the upper limit or less, the heat resistance, air permeability, and adhesive properties can be improved.

The content ratio of the third constituent unit can be calculated from the amount of the amide group-containing vinyl monomer charged. That is, the content ratio of the third constituent unit is as defined as the above-described content ratio of the amide group-containing vinyl monomer relative to the raw material of the water-soluble polymer.

When the raw material of the water-soluble polymer contains a copolymerizable monomer, the water-soluble polymer contains a fourth constituent unit derived from the copolymerizable monomer.

A content ratio of the fourth constituent unit in the water-soluble polymer is, for example, 1% by mass or more, preferably 5% by mass or more, and for example, 60% by mass or less, preferably 40% by mass or less, more preferably 20% by mass or less, further preferably 15% by mass or less, particularly preferably 10% by mass or less.

When the content ratio of the fourth constituent unit is the lower limit or more, the heat resistance, air permeability, and adhesive properties can be improved.

When the content ratio of the fourth constituent unit is the upper limit or less, the heat resistance, air permeability, and adhesive properties can be improved.

The content ratio of the fourth constituent unit can be calculated from the amount of the copolymerizable monomer charged. That is, the content ratio of the fourth constituent unit is as defined as the above-described content ratio of the copolymerizable monomer relative to the raw material of the water-soluble polymer.

The water-soluble polymer preferably contains the third and fourth constituent units, together with the first and second constituent units.

The water-soluble polymer has a glass transition temperature of, for example, 120°C or more; from the viewpoint of improving heat resistance, preferably 150°C or more, more preferably 180°C or more, further preferably 200°C or more, particularly preferably 210°C or more, most preferably 220°C or more, and for example, 300°C or less.

The above-described glass transition temperature can be measured, for example, using a Discovery DSC 2500 manufactured by TA Instruments.

In the manner described above, a raw material of a coating material for secondary battery separators containing the water-soluble polymer is obtained.

The raw material of the coating material for secondary battery separators contains the water-soluble polymer containing the first constituent unit derived from the reactive surfactant and the second constituent unit derived from the acidic group-containing vinyl monomer, each at a predetermined ratio. Therefore, it has excellent heat resistance, air permeability, and adhesive properties. The raw material of the coating material for secondary battery separators can be suitably used particularly for producing a coating material for secondary battery separators.

### <Coating Material for Secondary Battery Separators>

The coating material for secondary battery separators contains the raw material of the coating material for secondary battery separators and inorganic particles.

Examples of the inorganic particles include oxides, nitrides, carbides, sulfides, hydroxides, and potassium titanate. Examples of the oxide include alumina, silica, titania, zirconia, magnesia, ceria, yttria, zinc oxide, and iron oxide. Examples of the nitride include silicon nitride, titanium nitride, and boron nitride. Examples of the carbide include silicon carbide and calcium carbonate. Examples of the sulfide include magnesium sulfate and aluminum sulfate. Examples of the hydroxide include aluminum hydroxide and aluminum hydroxide oxide. Examples of the silicate include talc, kaolinite, dickite, nacrite, halloysite, pyrophyllite, montmorillonite, sericite, mica, amesite, bentonite, asbestos, zeolite, calcium silicate, magnesium silicate, diatomaceous earth, silica sand, and glass. As the inorganic particles, preferably, hydroxides are used. As the inorganic particles, more preferably, aluminum hydroxide oxide is used.

The inorganic particles have an average particle size of, for example, 0.1 µm or more, preferably 0.5 µm or more, and for example, 5 µm or less, preferably 1 µm or less.

As a method for measuring the average particle size of the inorganic particles, the average particle size thereof can be determined by creating a particle size distribution curve with a laser diffraction-scattering particle size distribution measurement device and calculating the particle size corresponding to 50% by mass.

These inorganic particles can be used alone or in combination of two or more.

A blending ratio of the inorganic particles relative to 100 parts by mass of the raw material of the coating material for secondary battery separators is, for example, 1000 parts by mass or more, and for example, 10000 parts by mass or less, preferably 5000 parts by mass or less.

To produce the coating material for secondary battery separators, first, inorganic particles and, if necessary, a dispersant are blended into water to prepare an inorganic particle dispersion liquid. When a dispersant is blended, the coating material for secondary battery separators contains a dispersant.

Examples of the dispersant include an ammonium polycarboxylate and a sodium polycarboxylate. As the dispersant, preferably, an ammonium polycarboxylate is used.

A blending ratio of the dispersant relative to 100 parts by mass of the inorganic particles is, for example, 0.5 parts by mass or more, preferably 1 part by mass or more, and, for example, 10 parts by mass or less, preferably 5 parts by mass or less.

These dispersants can be used alone or in combination of two or more.

Next, the raw material of a coating material for secondary battery separators is blended into the inorganic particle dispersion liquid and then stirred.

A stirring method is not particularly limited, and examples thereof include ball mills, bead mills, planetary ball mills, vibrating ball mills, sand mills, colloid mills, attritors, roll mills, high-speed impeller dispersion, dispersers, homogenizers, high-speed impact mills, ultrasonic dispersion, and stirring blades.

In addition, if necessary, an additive such as a hydrophilic resin, a wetting agent, a defoaming agent, or a pH adjusting agent can be blended into the coating material for secondary battery separators at an appropriate ratio. That is, the coating material for secondary battery separators contains an additive, if necessary.

These additives can be used alone or in combination of two or more.

As the details are described later, the coating material for secondary battery separators can improve heat resistance and adhesive properties without blending a wetting agent. Therefore, preferably, a wetting agent is not blended into the coating material for secondary battery separators. In other words, preferably, the coating material for secondary battery separators is substantially free of a wetting agent. The phrase "the coating material for secondary battery separators is substantially free of a wetting agent" means that a content ratio of the wetting agent relative to the coating material for secondary battery separators is, for example, 0.1% by mass or less, preferably 0.01% by mass or less, more preferably 0.001% by mass or less.

Thus, a coating material for secondary battery separators (aqueous dispersion of a coating material for secondary battery separators) is obtained.

The aqueous dispersion of the coating material for secondary battery separators has a solid content concentration of, for example, 10% by mass or more, preferably 20% by mass or more, more preferably 30% by mass or more, and for example, 50% by mass or less.

The coating material for secondary battery separators contains the raw material of a coating material for secondary battery separators described above. Therefore, it has excellent heat resistance, air permeability, and adhesive properties. The coating material for secondary battery separators can be suitably used particularly for producing a secondary battery separator.

### <Secondary Battery Separator>

The secondary battery separator includes a porous film, and a coating film of the coating material for secondary battery separators disposed on at least one surface of the porous film.

### [Porous Film]

Examples of the porous film include polyolefin porous films and aromatic polyamide porous films. Examples of the polyolefin porous film include polyethylene porous films and polypropylene porous films. As the porous film, preferably, a polyolefin porous film is used. The porous film may be subjected to surface treatment as needed. Examples of the surface treatment include corona treatment and plasma treatment.

The porous film has a thickness of, for example, 1 µm or more, preferably 5 µm or more, and for example, 40 µm or less, preferably 20 µm or less.

### [Coating Film]

The coating film is a heat-resistant layer that imparts heat resistance to the porous film. The coating film is made of the coating material for secondary battery separators.

The coating film has a thickness of, for example, 1 µm or more, preferably 3 µm or more, and for example, 10 µm or less, preferably 8 µm or less.

### [Method for Producing Secondary Battery Separator]

A method for producing the secondary battery separator includes a first step of preparing a porous film, and a second step of applying a coating material for separators to at least one surface of the porous film.

### (First step)

In the first step, a porous film is prepared.

### (Second Step)

In the second step, the coating material for secondary battery separators (aqueous dispersion of the coating material for secondary battery separators) is applied to at least one surface of the porous film and then, if necessary, dried, thereby obtaining a coating film.

An application method is not particularly limited, and examples thereof include a gravure coater method, a small-diameter gravure coater method, a reverse roll coater method, a transfer roll coater method, a kiss coater method, a dip coater method, a micro-gravure coating method, a knife coater method, an air doctor coater method, a blade coater method, a rod coater method, a squeeze coater method, a cast coater method, a die coater method, a screen printing method, and a spray application method.

The drying temperature is, for example, 40°C or more, and for example, 80°C or less.

Thus, the secondary battery separator including the porous film, and the coating film of the coating material for secondary battery separators disposed on at least one surface of the porous film is produced.

In the above-described description, the coating film of the coating material for secondary battery separators is disposed on at least one surface of the porous film. Alternatively, the above-described coating film can also be disposed on both surfaces of the porous film.

The secondary battery separator includes the coating film of the coating material for secondary battery separators described above. Therefore, it has excellent heat resistance, air permeability, and adhesive properties. The secondary battery separator can be suitably used particularly for producing a secondary battery.

### <Secondary Battery>

The secondary battery includes a positive electrode, a negative electrode, the above-described secondary battery separator which is disposed between the positive electrode and the negative electrode, and an electrolyte which is impregnated into the positive electrode, the negative electrode, and the above-described secondary battery separator.

As the positive electrode, for example, a known electrode including a positive electrode collector and a positive electrode active material which is laminated on the positive electrode collector is used.

Examples of the positive electrode collector include electrically conductive materials such as aluminum, titanium, stainless steel, nickel, calcined carbon, electrically conductive polymers, and electrically conductive glass.

The positive electrode active material is not particularly limited, and examples thereof include known positive electrode active materials such as a lithium-containing transition metal oxide, a lithium-containing phosphate, and a lithium-containing sulfate.

These positive electrode active materials can be used alone or in combination of two or more.

As the negative electrode, for example, a known electrode including a negative electrode collector and a negative electrode active material which is laminated on the negative electrode collector is used.

Examples of the negative electrode collector include electrically conductive materials such as copper and nickel.

The negative electrode active material is not particularly limited, and examples thereof include carbon active materials. Examples of the carbon active material include graphite, soft carbon, and hard carbon.

These negative electrode active materials can be used alone or in combination of two or more.

When a lithium ion battery is used as a secondary battery, an example of the electrolyte includes a solution in which a lithium salt is dissolved in a carbonate compound such as ethylene carbonate (EC), propylene carbonate (PC), and ethyl methyl carbonate (EMC).

Then, in order to produce the secondary battery, for example, a separator of the secondary battery is sandwiched between the positive electrode and the negative electrode to be housed in a battery casing (cell), and the electrolyte is injected into the battery casing. Thus, the secondary battery can be obtained.

The above-described secondary battery has excellent heat resistance, air permeability, and adhesive properties because of including the above-described secondary battery separator.

### <Function and Effect>

The raw material of the coating material for secondary battery separators contains the water-soluble polymer containing the first constituent unit derived from the reactive surfactant and the second constituent unit derived from the acidic group-containing vinyl monomer, each at a predetermined ratio. Therefore, it has excellent heat resistance, air permeability, and adhesive properties.

Specifically, from the viewpoint of improving heat resistance and adhesive properties, it is considered that a wetting agent is blended into the coating material for secondary battery separators containing the above-described raw material of the coating material for secondary battery separators.

Thus, more of the coating material for secondary battery separators is fixed onto the surface of the porous film, allowing improvement of heat resistance and adhesive properties. However, when a wetting agent is blended, a free wetting agent permeates the porous film, resulting in lowering of the air permeability.

In contrast to this, the raw material of the coating material for secondary battery separators contains the water-soluble polymer containing the first constituent unit derived from the reactive surfactant and the second constituent unit derived from the acidic group-containing vinyl monomer, each at a predetermined ratio.

Thus, even though a wetting agent is not blended into the coating material for secondary battery separators, the heat resistance and adhesive properties can be improved, and also, since a wetting agent is not blended, the lowering of the air permeability due to the above-described free wetting agent can be suppressed, and as a result, the air permeability can be improved.

The coating material for secondary battery separators contains the raw material of a coating material for secondary battery separators described above. Therefore, it has excellent heat resistance, air permeability, and adhesive properties.

The secondary battery separator includes a coating film of the above-described coating material for secondary battery separators. Therefore, it has excellent heat resistance, air permeability, and adhesive properties.

The secondary battery includes the above-described secondary battery separator. Therefore, it has excellent heat resistance, air permeability, and adhesive properties. Example

Next, the present invention is described with reference to Examples and Comparative Examples. The present invention is however not limited by the following Examples. The "parts" and "%" are based on mass unless otherwise specified. The specific numerical values in blending ratio (content ratio), property value, and parameter used in the following description can be replaced with upper limit values (numerical values defined as "or less" or "below") or lower limit values (numerical values defined as "or more" or "above") of corresponding numerical values in blending ratio (content ratio), property value, and parameter described in the above-described "DESCRIPTION OF THE EMBODIMENTS".

### <Details of Components>

Details of the active ingredient used in the following Examples and Comparative Examples are described below.
SR-10: ADEKA REASOAP SR-10, compound represented by the above-described formula (2) (n=10), number of moles of ethylene oxide added: 10, manufactured by ADEKA Corporation
SR-20: ADEKA REASOAP SR-20, compound represented by the above-described formula (2) (n=20), number of moles of ethylene oxide added: 20, manufactured by ADEKA Corporation
ER-10: ADEKAREASOAP ER-10, compound represented by the above-described formula (4) (n=10), number of moles of ethylene oxide added: 10, manufactured by ADEKA Corporation
ER-20: ADEKAREASOAP ER-20, compound represented by the above-described formula (4) (n=20), number of moles of ethylene oxide added: 20, manufactured by ADEKA Corporation
ER-30: ADEKAREASOAP ER-30, compound represented by the above-described formula (4) (n=30), number of moles of ethylene oxide added: 30, manufactured by ADEKA Corporation
ER-40: ADEKAREASOAP ER-40, compound represented by the above-described formula (4) (n=40), number of moles of ethylene oxide added: 40, manufactured by ADEKA Corporation
KH-05: AQUALON KH-05, compound represented by the above-described formula (4) (n=5), number of moles of ethylene oxide added: 5, manufactured by DKS Co. Ltd.
Mam: Methacrylic acid
Mac: Methacrylamide
HEMA: 2-hydroxyethyl methacrylate

### <Production of Raw Material of Coating Material for Secondary Battery Separators, Coating Material for Secondary Battery Separators, and Secondary Battery Separator>

### Example 1

### [Production of Raw Material of Coating Material for Secondary Battery Separators]

A separable flask equipped with a stirrer and a reflux condenser was charged with 392.0 parts by mass of distilled water to be replaced with a nitrogen gas, and then, the temperature thereof was increased to 80°C. Then, 0.6 parts by mass of ammonium persulfate was added, thereafter, SR-10, Mac, Mam, and HEMA were dissolved in water so that the first to fourth constituent units achieved the proportions listed in Table 1, and the dissolved components were partially neutralized with ammonia water. The mixture was continuously added over a period of 3 hours, and further held for 3 hours to complete polymerization. An appropriate amount of water was added thereto to obtain an aqueous solution of a water-soluble polymer having a solid content of 15.0% by mass. A pH of the water-soluble polymer was 6.0. Thus, a raw material of a coating material for secondary battery separators containing the water-soluble polymer was produced.

### [Production of Coating Material for Secondary Battery Separators]

As inorganic particles, 100 parts by mass of aluminum hydroxide oxide (manufactured by TAIMEI CHEMICALS Co., Ltd., Boehmite Grade C06, particle size: 0.7 µm) and as a dispersant, 3.0 parts by mass (in terms of solid content) of an aqueous solution of ammonium polycarboxylate (manufactured by SAN NOPCO LIMITED, SN Dispersant 5468) were uniformly dispersed in 110 parts by mass of water to prepare an inorganic particle dispersion liquid.

Then, to this inorganic particle dispersion liquid, the above-described raw material of the coating material for secondary battery separators was added so as to be 5 parts by mass in terms of solid content, and water was added such that the solid content was 40% by mass, and the mixture was stirred for 15 minutes. Thus, a coating material for secondary battery separators was produced.

### [Production of Secondary Battery Separator]

### (First step)

As a porous film, a polyolefin resin porous film was prepared. Specifically, as the polyolefin resin porous film, product number SW509C+ (film thickness of 9.6 µm, porosity of 40.6%, degree of air permeability of 158 g/100 ml, surface density of 5.5 g/m², manufactured by Changzhou Senior New Energy Materials Co., Ltd.) was prepared.

Then, the surface of the polyolefin resin porous film was cut into an A4 size.

### (Second Step)

The coating material for secondary battery separators (aqueous dispersion of the coating material for secondary battery separators) was applied onto the surface (one surface) of the polyolefin resin porous film using a wire bar. Thereafter, the coated product was dried at 50°C. Thus, a coating film (thickness of 5 µm) was formed on the surface (one surface) of the polyolefin resin porous film. Thus, a secondary battery separator was produced.

### Examples 2 to 20 and Comparative Examples 1 to 8

According to the same procedure as in Example 1, a raw material of a coating material for secondary battery separators, a coating material for secondary battery separators, and a secondary battery separator were produced. However, the formulation of each of the components was changed so that the first to fourth constituent units achieved the proportions listed in Tables 1 to 3.

### <Evaluation>

### [Glass Transition Temperature of Water-Soluble Polymer]

The glass transition temperature of each of the water-soluble polymers of Examples and Comparative Examples was measured. Specifically, measurements were performed using a Discovery DSC2500 manufactured by TA Instruments, under the measurement condition 1: R.T./300°C (held for 1 minute) / -90°C (held for 3 minutes); temperature increase rate 50°C/min, temperature decrease rate 10°C/min, and 2nd temperature increase rate 10°C/min, under a nitrogen atmosphere. The results are shown in Tables 1 to 3.

### [Heat Resistance]

Each of the secondary battery separators of Examples and Comparative Examples was cut into a size of 5 cm× 5 cm as test pieces. After the test pieces were left to stand in an oven at 150°C for 1 hour, the length of each side was measured, and a thermal shrinkage rate was calculated. The heat resistance was evaluated in accordance with the following criteria. The results are shown in Tables 1 to 3.

### (Criteria)

⊚: The thermal shrinkage rate was below 5%.
○: The thermal shrinkage rate was 5% or more and below 20%.
△: The thermal shrinkage rate was 20% or more and below 50%.
×: The thermal shrinkage rate was 50% or more.

### [Air Permeability]

The degree of air permeability of each of the secondary battery separators of Examples and Comparative Examples was measured in conformity with JIS-P-8117 using an Oken-type air permeability smoothness tester manufactured by ASAHI SEIKO CO., LTD. It was evaluated that the smaller the degree of air permeability was, the more excellent the air permeability was. The air permeability was evaluated in accordance with the following criteria. The results are shown in Tables 1 to 3.

### (Criteria)

⊚: The degree of air permeability was below 210 s/100 ml.
○: The degree of air permeability was 210 s/100 ml or more and below 250 s/100 ml.
×: The degree of air permeability was 250 s/100 ml or more.

### [Adhesive Properties]

The adhesive properties of each of the secondary battery separators of Examples and Comparative Examples was measured. Specifically, the coating film on the secondary battery separator was rubbed with an eraser. The adhesive properties were evaluated in accordance with the following criteria. The results are shown in Tables 1 to 3.

### (Criteria)

⊚: The coating film was not peeled off even after being rubbed 5 times under a 400 g-load.
○: The coating film was peeled off after being rubbed less than 5 times under a 400 g-load.
×: The coating film was peeled off after being rubbed under a 100 g-load.

### [Table 1]

**TABLE 1**

| Examples and Comparative Examples No. | | | | Ex. 1 | Ex. 2 | Ex. 3 | Comp. Ex. 1 | Comp. Ex. 2 | Ex. 4 | Ex. 5 | Comp. Ex. 3 | Comp. Ex. 4 |
|---|---|---|---|---|---|---|---|---|---|---|---|---|
| Water-soluble polymer | First constituent unit (mass%) | Anionic reactive surfactant | SR-10 | 7 | 3 | 28 | 2 | 32 | 7 | 7 | 7 | 7 |
| | | Nonionic reactive surfactant | ER-10 | - | - | - | - | - | - | - | - | - |
| | Second constituent unit (mass%) | Acidic group-containing vinyl monomer | Mac | 7 | 7 | 7 | 7 | 7 | 3 | 18 | 2 | 20 |
| | Third constituent unit (mass%) | Amide group-containing vinyl monomer | Mam | 79 | 83 | 58 | 84 | 54 | 83 | 68 | 84 | 66 |
| | Fourth constituent unit (mass%) | Hydroxyl group-containing vinyl monomer | HEMA | 7 | 7 | 7 | 7 | 7 | 7 | 7 | 7 | 7 |
| Evaluation | Glass transition temperature (°C) | | | 225 | 226 | 216 | 230 | 213 | 227 | 215 | 228 | 216 |
| | Heat resistance | | | ⊚ | ⊚ | ⊚ | × | × | ⊚ | ○ | × | × |
| | Air permeability | | | ⊚ | ⊚ | ⊚ | × | × | ⊚ | ⊚ | ○ | × |
| | Adhesive properties | | | ⊚ | ○ | ⊚ | × | × | ⊚ | ○ | × | × |

### [Table 2]

**TABLE 2**

| Examples and Comparative Examples No. | | | | Ex. 6 | Ex. 7 | Ex. 8 | Comp. Ex. 5 | Comp. Ex. 6 | Ex. 9 | Ex. 10 | Comp. Ex. 7 | Comp. Ex. 8 |
|---|---|---|---|---|---|---|---|---|---|---|---|---|
| Water-soluble polymer | First constituent unit (mass%) | Anionic reactive surfactant | SR-10 | - | - | - | - | - | - | - | - | - |
| | | Nonionic reactive surfactant | ER-10 | 7 | 3 | 28 | 2 | 32 | 7 | 7 | 7 | 7 |
| | Second constituent unit (mass%) | Acidic group-containing vinyl monomer | Mac | 7 | 7 | 7 | 7 | 7 | 3 | 18 | 2 | 20 |
| | Third constituent unit (mass%) | Amide group-containing vinyl monomer | Mam | 79 | 83 | 58 | 84 | 54 | 83 | 68 | 84 | 66 |
| | Fourth constituent unit (mass%) | Hydroxyl group-containing vinyl monomer | HEMA | 7 | 7 | 7 | 7 | 7 | 7 | 7 | 7 | 7 |
| Evaluation | Glass transition temperature (°C) | | | 235 | 237 | 227 | 237 | 226 | 237 | 228 | 238 | 227 |
| | Heat resistance | | | ⊚ | ⊚ | ⊚ | × | × | ⊚ | ○ | × | × |
| | Air permeability | | | ⊚ | ⊚ | ⊚ | × | × | ⊚ | ⊚ | ○ | × |
| | Adhesive properties | | | ⊚ | ○ | ⊚ | × | × | ⊚ | ○ | × | × |

### [Table 3]

**TABLE3**

| Examples No. | | | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|---|
| Water-soluble polymer | First constituent unit (mass%) | Anionic reactive surfactant | SR-10 | - | - | - | 17 | 7 | - | - | - | - | - |
| | | | SR-20 | - | - | - | - | - | - | - | - | - | 7 |
| | | Nonionic reactive surfactant | ER-10 | 10 | 17 | 7 | - | - | - | - | - | - | - |
| | | | ER-20 | - | - | - | - | - | 7 | - | - | - | - |
| | | | ER-30 | - | - | - | - | - | - | 7 | - | - | - |
| | | | ER-40 | - | - | - | - | - | - | - | 7 | - | - |
| | | | KH-05 | - | - | - | - | - | - | - | - | 7 | - |
| | Second constituent unit (mass%) | Acidic group-containing vinyl monomer | Mac | 13 | 17 | 7 | 17 | 7 | 7 | 7 | 7 | 7 | 7 |
| | Third constituent unit (mass%) | Amide group-containing vinyl monomer | Mam | 25 | 49 | 86 | 49 | 86 | 79 | 79 | 79 | 79 | 79 |
| | Fourth constituent unit (mass%) | Hydroxyl group-containing vinyl monomer | HEMA | 52 | 17 | - | 17 | - | 7 | 7 | 7 | 7 | 7 |
| Evaluation | Glass transition temperature (°C) | | | 130 | 203 | 250 | 190 | 240 | 243 | 251 | 258 | 230 | 230 |
| | Heat resistance | | | △ | ○ | ⊚ | ○ | ⊚ | ⊚ | ⊚ | ○ | ⊚ | ⊚ |
| | Air permeability | | | ○ | ○ | ⊚ | ○ | ⊚ | ⊚ | ⊚ | ⊚ | ⊚ | ⊚ |
| | Adhesive properties | | | ⊚ | ○ | ⊚ | ○ | ⊚ | ⊚ | ⊚ | ⊚ | ⊚ | ⊚ |

While the illustrative embodiments of the present invention are provided in the above-described invention, such is for illustrative purpose only and it is not to be construed restrictively. Modification and variation of the present invention that will be obvious to those skilled in the art is to be covered by the following claims.

### Industrial Applicability

The raw material of a coating material for secondary battery separators, the coating material for secondary battery separators, and the secondary battery separator according to the present invention can be suitably used, for example, for producing a secondary battery. The secondary battery of the present invention can be suitably used, for example, in various devices and automobiles.

## Claims

1. A raw material of a coating material for a secondary battery separator, comprising a water-soluble polymer, wherein
the water-soluble polymer comprises a first constituent unit derived from a reactive surfactant and a second constituent unit derived from an acidic group-containing vinyl monomer,
a content ratio of the first constituent unit relative to the water-soluble polymer is 3% by mass or more and 30% by mass or less, and
a content ratio of the second constituent unit relative to the water-soluble polymer is 3% by mass or more and 19% by mass or less.

2. The raw material of a coating material for a secondary battery separator according to claim 1, wherein the water-soluble polymer has a glass transition temperature of 150°C or more.

3. The raw material of a coating material for a secondary battery separator according to claim 1, wherein
the water-soluble polymer comprises a third constituent unit derived from an amide group-containing vinyl monomer, and
a content ratio of the third constituent unit relative to the water-soluble polymer is 51% by mass or more and 94% by mass or less.

4. The raw material of a coating material for a secondary battery separator according to claim 1, wherein the reactive surfactant is an ether sulfate type anionic reactive surfactant.

5. The raw material of a coating material for a secondary battery separator according to claim 4, wherein the ether sulfate type anionic reactive surfactant is an ethylene oxide adduct.

6. The raw material of a coating material for a secondary battery separator according to claim 1, wherein the reactive surfactant is an ethylene oxide addition type nonionic reactive surfactant.

7. The raw material of a coating material for a secondary battery separator according to claim 5, wherein the number of moles of ethylene oxide added is 5 moles or more and 30 moles or less.

8. A coating material for a secondary battery separator, comprising the raw material of a coating material for a secondary battery separator according to claim 1; and an inorganic particle.

9. A second battery separator, comprising
a porous film; and
a coating film of the coating material for a separator according to claim 8 being disposed on at least one surface of the porous film.

10. A secondary battery comprising a positive electrode; a negative electrode; and the secondary battery separator according to claim 9 being disposed between the positive electrode and the negative electrode.
